# EUROPEAN PATENT APPLICATION

(11) **EP 3 379 515 A1**
(43) Date of publication of application: **26.09.2018**
(21) Application number: 18162969.2
(22) Date of filing: 20.03.2018
(51) Int. Cl.: G08G 1/16, G06K 9/00

(54) **AUTOMATIC DRIVING SYSTEM FOR A VEHICLE**

(30) Priority: 20.03.2017 IT 201700030562
(71) Applicant: IVECO FRANCE S.A.S., 69200 Vénissieux (FR)
(72) Inventor: SANCHEZ, Francisco, 6970 CHAPONNAY (FR)
(74) Representative: Bongiovanni, Simone

(57) **Abstract**

Automatic driving system (1) for a vehicle (2) on a road (3), the system (1) comprising a plurality of sensor means (4) positioned along the road (3) and each configured to observe an area (8) wherein to detect the presence of a moving object, and telecommunication means (9) configured to allow the communication of data acquired by the sensor means (4). The area (8) comprises a first portion (8a) positioned on the road (3) and a second portion (8b) positioned in proximity to the edges (3a) of the road (3), the system (1) being configured to recognise the presence of moving and/or foreign objects on the second portion (8b) which are approaching the road (3) so as to automatically regulate, as a consequence, the speed and/or trajectory of the vehicle (2) on the road (3).

## Description

### PRIORITY CLAIM

*This application claims priority from Italian Patent Application No.* 102017000030562 filed on March 20, 2017***.***

The present invention relates to an automatic driving system for a vehicle, preferably for the public transport of passengers, for example a bus.

Automatic driving systems for vehicles usually comprise sensors installed on the vehicle and configured to acquire data relating to the space around the vehicle. The sensors are preferably video cameras having a field of view around the vehicle.

The data acquired by the sensors are transmitted to an electronic unit configured to process them and control the vehicle on the basis of the said processing. The vehicle is thus driven by automatic driving means of known type.

However, the sensors can only detect the presence of a foreign object, for example a child, a rock, or an animal, within their field of view which is limited to a few metres from the vehicle. The speed of automatically driven vehicles is therefore reduced in order to limit damage caused if unforeseen accidents occur.

It is thus still necessary to improve automatic driving systems in order to enhance the speed and reliability of vehicles.

The objects of this invention are to resolve the above-mentioned problems.

The above-mentioned objects are achieved by an automatic driving system for a vehicle according to claim 1.

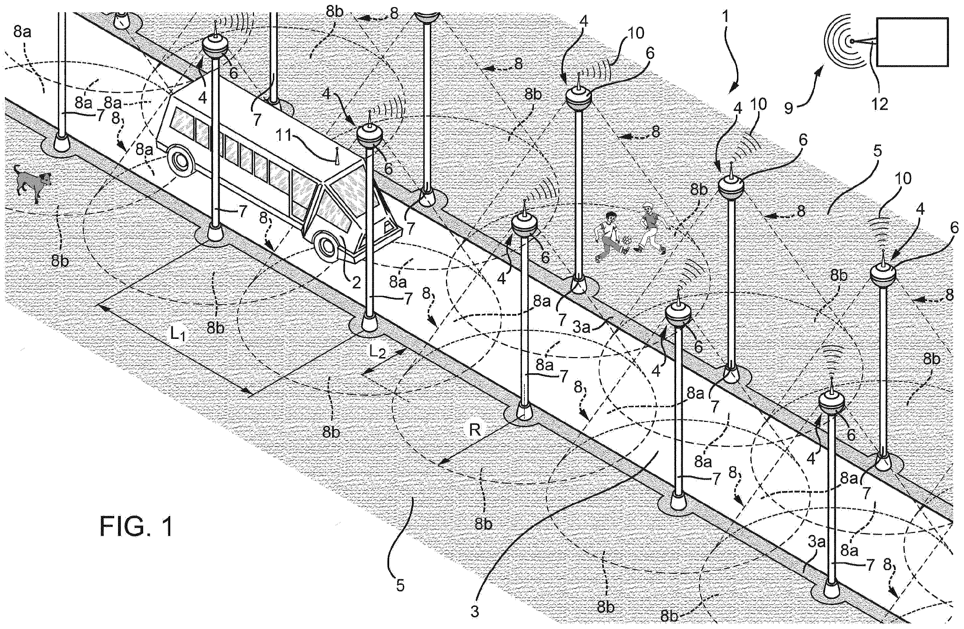

Other characteristics and advantages of the invention will become apparent from the following non-limiting description, provided for illustrative purposes, with reference to the attached drawing, Figure 1, wherein an automatic driving system for a vehicle according to the present invention is shown.

Figure 1 shows an automatic driving system 1 essentially comprising a vehicle 2, for example a bus, in motion along a road 3.

A plurality of sensors 4 is beneficially positioned along the road 3; they are configured to detect the presence of moving and/or foreign objects on the road 3 and on an outer part 5 of the lateral edges 3a of the road 3.

The sensors 4 are preferably video cameras 6 installed on posts 7 positioned along the road 3, for example on the lateral edges 3a of the road 3.

Each video camera 6 can observe an area 8 around the post 7 within a radius r which is preferably greater than half the width of the road 3. The field of view of the video camera 6 thus covers a portion 8a of the road 3 as well as a portion 8b of the outer part 5 of the lateral edges 3a of the road.

The posts 7 are beneficially spaced apart from each other at a distance L1 so that the fields of view 8 overlap each other to ensure that the video cameras 6 can observe all of the road 3 as well as all of the outer part 5 of the lateral edges 3a of the road 3.

The posts 7 on one of the sides 3a of the road 3 are preferably positioned in a staggered way with respect to the posts 7 on the opposite side 3a.

The parts 8a of the areas 8 overlap with each other so as to observe all of the road 3, while the parts 8b overlap with each other so as to observe all the strip of width L2 from the edges 3a of the road in the outer part 5.

The system also comprises telecommunication means 9 configured to permit communication between the sensors 4 and the vehicle 2. These telecommunication means 9 are preferably radio means.

The telecommunication means 9 may comprise a first element 10, for example a transmitter, installed for each sensor 4 and configured to transmit the data acquired by the sensors 4, and a second element 11, for example a receiver, installed on the vehicle 2 and configured to receive the data transmitted by the first element.

The second element is also beneficially configured to communicate with an electronic unit (not shown) of the vehicle 2, for example the ECU of the vehicle 2, in order to control the trajectory and the speed of the vehicle 2.

The electronic unit is configured to understand if a moving object within a strip of width L2 is moving towards the road 3 and the unit can thus control the speed and/or trajectory of the vehicle 2. If the road 3 and the strip of width L2 are free, the vehicle can proceed at a sustained speed.

The telecommunication means 9 may also comprise a third element, for example a station 12, configured to receive the data transmitted by the first element and process them in a similar way to the above-mentioned ECU. The station 12 is also configured to remotely control the speed and/or the trajectory of the vehicle 2 by communicating with the second element 11.

The station 12 may also comprise screens (not shown) which display the images acquired by the video cameras 6 to a supervisor who can manually drive the vehicle 2.

The operation of the automatic driving system for a vehicle is the following.

The vehicle 2 advances at a controlled speed along the road 3. During the vehicle's journey, the video cameras 6 observe the road 3 and a strip of width L2 in the outer portion 5. The electronic unit (or the station 12 but still a controller) can recognise if a moving and/or foreign object is positioned on the road 3 or if a moving object in the strip of width L2 in the outer portion 5 is moving towards the trajectory of the vehicle 2.

The electronic unit (or the controller) will therefore adjust the speed and/or trajectory of the vehicle 2 based on the images acquired by the video cameras 6.

From the foregoing, the benefits of an automatic driving system for a vehicle according to the present invention are apparent.

The system 1 makes it possible to vary the speed and/or trajectory of the vehicle 2 as a function of the presence of moving and/or foreign objects not only on the road but also around the road 3.

The reliability of the automatic driving of the vehicle 2 is therefore enhanced.

Finally, it is apparent that the automatic driving system 1 for a vehicle 2 according to the present invention may be subject to modifications and variations without thereby departing from the protective scope of the claims.

For example, the type or the positioning of the sensors 4 can be changed without however changing their operation.

The telecommunication means 9 could also use other communication techniques without however changing their functioning.

## Claims

1. An automatic driving system (1) for a vehicle (2) on a road (3), said system (1) comprising a plurality of sensor means (4) positioned along said road (3) each configured to observe an area (8) wherein to detect the presence of a moving object, and telecommunication means (9) configured to allow the communication of the data acquired by said sensor means (4), said area (8) comprising a first portion (8a) positioned on said road (3) and a second portion (8b) positioned in proximity to the edges (3a) of said road (3), said system (1) being configured to recognise the presence of moving objects on the second portion (8b) and those which are approaching said road (3) to automatically regulate, as a consequence, the speed and/or the trajectory of said vehicle (2) on said road (3).

2. The system according to claim 1, **characterised in that** said first area and said second area (8) overlap one another to cover all of the road (3) and the respective side strips in proximity to the outer area of the edges (3a) of the road (3).

3. The system according to one of the claims 1 or 2 **characterised in that** said sensor means (4) are positioned at the edges (3a) of said road (3).

4. The system according to one of the claims 1 to 3, **characterised in that** said sensor means (4) are video cameras (6) .

5. The system according to one of the claims 1 to 4, **characterised in that** said telecommunication means (9) are wireless devices.

6. The system according to one of the claims 1 to 5, **characterised in that** said telecommunication means (9) comprise a first element (10) connected to each of said sensor means (4) and configured to transmit the data that said sensor means (4) have acquired and a second element (11) installed on said vehicle (2), said second element (11) being configured to acquire said data and transmit them to an electronic unit of said vehicle (2) configured to process them and control the speed of said vehicle (2).

7. The system according to claim 6, **characterised in that** said electronic unit is the ECU of the vehicle.

8. The system according to one of the claims 1 to 5, **characterised in that** said telecommunication means (9) comprise a first element (11) connected to each of said sensor means (4) and configured to transmit the data that said sensor means (4) have acquired, a second element (12) configured to acquire said data, processing and transmitting them to a third element (11) installed in said vehicle (2) and configured to acquire the data of said second element (12) and control the speed and/or the trajectory of said vehicle (2).
